# EUROPÄISCHE PATENTSCHRIFT

(11) **EP 0 943 286 B1**
(45) Veröffentlichungstag und Bekanntmachung des Hinweises auf die Patenterteilung: **25.02.2004**
(21) Anmeldenummer: 99105351.3
(22) Anmeldetag: 16.03.1999
(51) Int. Cl.: A47L 15/42, H02B 1/044, H02B 15/00

(54) **In einen Türrahmen einsetzbare Bedien- bzw. Anzeigevorrichtung, insbesondere für eine Geschirrspülmaschine**
Mounting of control and display devices in a door frame, especially for dishwasher
Montage d'organes de commande et d'affichage dans un cadre de porte, en particulier pour lave-vaisselle

(30) Priorität: 17.03.1998 DE 29804816 U
(43) Veröffentlichungstag der Anmeldung: 22.09.1999
(73) Patentinhaber: BSH Bosch und Siemens Hausgeräte GmbH, 81739 München (DE)
(72) Erfinder: Mayer, Herbert Dipl.-Ing. (FH)), 93077 Bad Abbach (DE); Meyer, Frank, 93057 Regensburg (DE)

(56) Entgegenhaltungen:
- EP-A- 0 728 437
- EP-A- 0 759 530
- FR-A- 2 292 413
- FR-A- 2 533 305

## Beschreibung

Die Erfindung bezieht sich auf eine in einen Türrahmen einsetzbare Bedien- bzw. Anzeigevorrichtung, insbesondere für eine Geschirrspülmaschine, gemäß Anspruch 1; derartige Bedien- bzw. Anzeigevorrichtungen eignen sich insbesondere für sogenannte vollintegrierte Geräte, vorzugsweise Geschirrspülmaschinen, bei denen die Vorrichtung innerhalb einer Beschickungstür angeordnet ist und die vordere Bedien- bzw. Anzeigeebene erst in Öffnungsstellung der Beschickungstür in der Schmalseite des oberen Türrahmens zugänglich, ansonsten jedoch verdeckt und von außen nicht sichtbar bzw. betätigbar ist (siehe z.B EP 0 728 437 A).

FR 2 292 413 beschreibt einen Aufnahmeschacht in einem Bauteil eines elektrischen Gerätes, wobei aber nicht die komplette Bedien- und Auzeigevorrichtung von innen her einführbar ist.

Gemäß Aufgabe vorliegender Erfindung soll der Fertigungs- und insbesondere der Montageaufwand zur Integrierung der Bedien- bzw. Anzeigevorrichtung in den Türrahmen gemindert werden. Die Lösung dieser Aufgabe gelingt erfindungsgemäß durch die des Merkmale Patentanspruchs 1; vorteilhafte Ausgestaltungen der Erfindung sind jeweils Gegenstand der

Die Montage der Bauteileinheit der zweckmäßigerweise von einem Gehäuse aufgenommenen Bedien- bzw. Anzeigevorrichtung dadurch in besonders einfacher Weise und ohne Notwendigkeit einer zusätzlichen Montagevorrichtung möglich, daß die zuvor komplettierte Baugruppe der Bedien- bzw. Anzeigevorrichtung in den Aufnahmeschacht von dessen dem Türrahmen abgewandten Aufnahmeseite eingeführt und ohne weitere Führungs- bzw. Montagehilfe, z.B. von Hand, bis in seine Einschub-Endstellung geführt vorschiebbar und dort, insbesondere durch Verrastung, selbsttätig fixierbar ist.

Zum Schutz gegen das Eindringen von Feuchtigkeit von der äußeren Türrahmenseite, insbesondere bei geöffneter Beschickungstür, ist das Gehäuse vorderseitig von einer elastischen Schutzhaube, insbesondere Silikon-Schutzhaube, übergriffen; diese elastische Schutzhaube dient gleichzeitig dadurch als Fixierungshilfe, daß die Bedien- bzw. Anzeigevorrichtung unter Zwischenlage der elastischen Schutzhaube in dem Türrahmen bzw. dem Aufnahmeschacht im elastischen Preßsitz unter Ausgleich von Bauteiltoleranzen montierbar ist.

An der Vorderseite der Schutzhaube sind im Bereich der Bedien- bzw. Anzeigeebene Hart-Tasten, insbesondere Wipptästen, fixiert, deren Betätigung über die elastisch verformbare Schutzhaube auf rückseitige Stellmittel im Gehäuse der Bedien- bzw. Anzeigevorrichtung übertragbar ist. Eine Betätigungs-Rückmeldung des Stellmittels erfolgt von hinter den Stellmitteln im Inneren des Gehäuses angeordneten Anzeigeelemente, insbesondere Leuchtdioden, über Lichtleiter zur vorderen Bedien- bzw. Anzeigeebene, wobei die zwischenliegende Schutzhaube in vorteilhafter Weise als Lichtdiffusor-Membran ausgebildet ist.

Die Erfindung sowie weitere vorteilhafte Ausgestaltungen der Erfindung gemäß Merkmalen der abhängigen Ansprüche werden im folgenden anhand eines schematisch dargestellten Ausführungsbeispiels in der Zeichnung näher erläutert; darin zeigen:
- FIG 1: eine Geschirrspülmaschine mit geöffneter Beschickungstür und dabei in deren oberem Rahmenteil zugänglicher Bedien- bzw. Anzeigeebene einer in die Beschickungstür voll integrierten Bedien- bzw. Anzeigevorrichtung;
- FIG 2: einen Teilausschnitt der im Rahmenteil der Besckickungstür zugänglichen Bedien- bzw. Anzeigeebene;
- FIG 3: in perspektivischer Explosionsdarstellung die komplettierte Bedien- bzw. Anzeigevorrichtung vor ihrer Montage in dem Türrahmen;
- FIG 4: die komplettierte Bedien- bzw. Anzeigevorrichtung gemäß FIG 3 im Schnittverlauf senkrecht zu ihrer Bedien- bzw. Anzeigeebene.

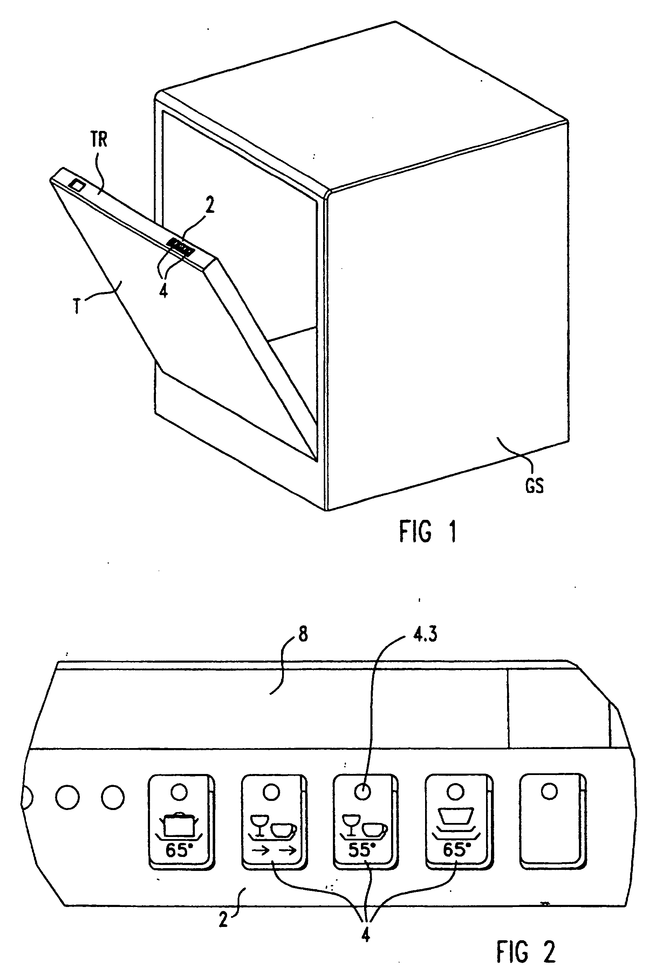

FIG 1 zeigt eine Geschirrspülmaschine GS mit in Öffnungsstellung gebrachter Beschickungstür T. Bei Öffnung der Beschickungstür T wird im oberen Querteil ihres Türrahmens TR die Bedien- bzw. Anzeigeebene 2 einer vollintegrierten Bedien- bzw. Anzeigevorrichtung zugänglich. FIG 2 zeigt in vergrößertem Ausschnitt aus FIG 1 fünf Hart-Tasten 4 mit integrierter Betätigungs-Leuchtanzeige 4.3 als Ausschnitt der Bedien- bzw. Anzeigeebene 2 im Türrahmen TR der Beschickungstür T.

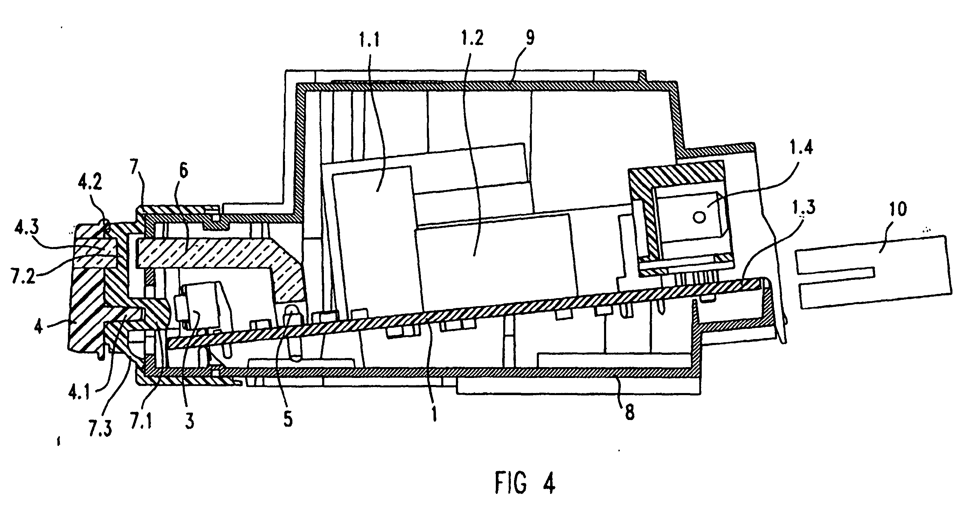

Die in die Beschickungstür T bzw. in den Türrahmen TR einzusetzende Bedien- bzw. Anzeigevorrichtung wird im folgenden anhand des Schnittbildes nach FIG 4 näher erläutert.

Eine, sämtliche elektronischen sowie mechanischen Bauteile aufnehmende einzige Leiterplatte 1 ist im Gehäuseunterteil 8 eines zweiteiligen Gehäuses 8;9 mit einer zur Bedien- bzw. Anzeigeebene 2 im wesentlichen senkrechten Teilungsebene aufgenommen. Die Leiterplatte 1 ist im Gehäuseunterteil 8 in geringer Abweichung von der zur Bedien- bzw. Anzeigeebene 2 senkrechten Richtung derart leicht schräg zur Rückseite ansteigend aufgenommen, daß in montagetechnisch einfacher und unbehinderter Weise ein Kontaktierungsbereich 1.4 am rückwärtigen stirnseitigen Ende der Leiterplatte 1 mit einem Kabelbaum-Stecker 10 bzw. ein Hochstrom-Heizungsstecker 1.4 kontaktierbar ist; im mittleren Teil der Leiterplatte 1 sind z.B. elektronische Bauteile 1.1;1.2 und im vorderen, der Bedien- bzw. Anzeigeebene 2 zugewandten, Teil der Leiterplatte 1 sind frontseitig 90°-Winkeltaster 3 als Stellmittel und dahinter Leuchtdioden als Leuchtanzeigen 5 von Tastenbetätigungen gehaltert bzw. kontaktiert.

Die der Bedien- bzw. Anzeigeebene 2 zugewandte Vorderseite des Gehäuses 8;9 ist durch eine überspannbare Schutzhaube 7, insbesondere in Form einer Silikon-Schutzhaube, als Schutz gegen das Eindringen von äußerer Feuchtigkeit abgedeckt.

Zur frontseitigen Bedienauslösung der 90°-Winkeltaster 3 dienen Hart-Tasten 4, die nach einer Ausgestaltung der Erfindung als ergonomisch vorteilhafte Wipp-Tasten mit vorzugsweise in ihrer Bedienfläche integrierter Betätigungs- bzw. Funktionssymbolik-Anzeige um eine obere Schwenkachse 4.2 auf der Schutzhaube 7 schwenkbar gelagert sind; die Hart-Tasten 4 betätigen mit einem im unteren Teil rückseitig angeformten ersten Stößel 4.1 einen in die elastische Schutzhaube 7 eingearbeiteten zweiten Stößel 7.1, der toleranzausgleichend und stellwegverlängernd jeweils den dahinter auf der Leiterplatte 1 angeordneten 90°-Winkeltaster mit funktionssicherer jedoch vor einer Überdruck-Belastung schützender Druckbeaufschlagung betätigt. Die ersten Stößel 4.1 der Hart-Tasten 4 sind jeweils im Sinne einer Vorfixierung der Hart-Tasten 4 an der Schutzhaube 7 in die entsprechende Stößelaufnahmen der zweiten Stößel 7.1 der Schutzhaube 7 eingedrückt, derart daß die Hart-Tasten 4 mit der Schutzhaube 7 als vorfertigbare Bauteileinheit zusammenbaubar sind. In vorteilhafter Weise ist darüber hinaus die Schutzhaube 7 an ihrer der Gelenkaufnahme eines Hart-Tasters 4 jeweils abgewandten unteren Seite mit einem bei Drücken der Hart-Taste 4 vorspannbaren Steg 7.3 im Sinne eines die jeweilige Hart-Taste 4 rückstellenden Schnappschalters ausgebildet.

Die von den auf der Leiterplatte 1 hinter den 90°-Winkeltastern 3 als Leuchtanzeigen angeordneten Leuchtdioden abgewinkelt zur Bedien- bzw. Anzeigeebene 2 verlaufenden Lichtleiter 6 enden in einem Bereich der Schutzhaube 7, der als Lichtdiffusor-Membran 7.2 ausgebildet ist und der in der Hart-Taste 4 eine korrespondierende, mit dieser als Zweikomponenten-Bauteil integrierter Lichtleiter als Betätigungs-Leuchtanzeige 4.3 entspricht.

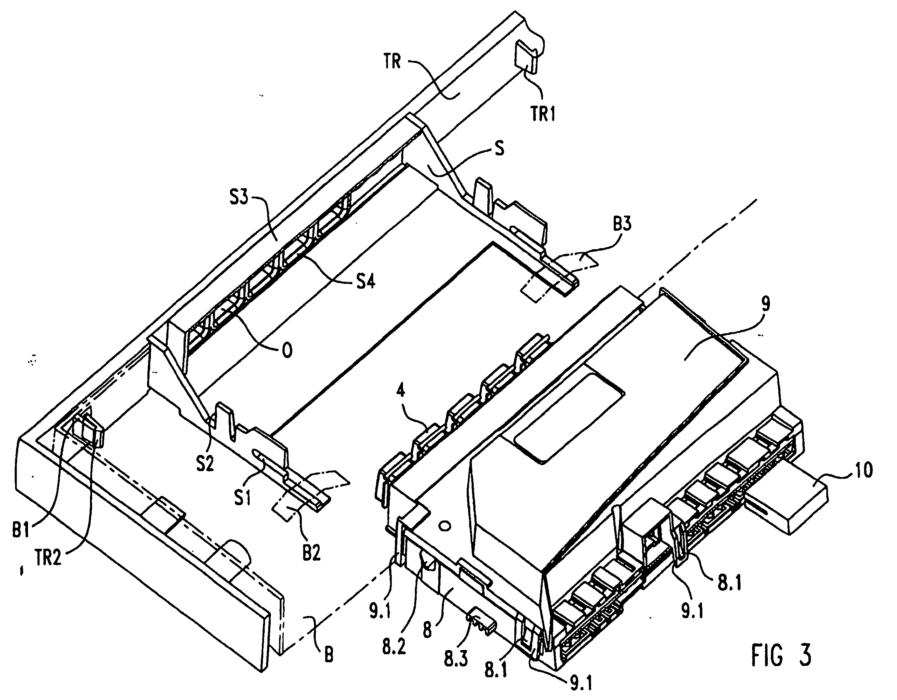

Die erfindungsgemäß vorteilhafte gegenseitige Montage zwischen der komplettierten Bedien- bzw. Anzeigevorrichtung einerseits und dem Türrahmen TR andererseits wird im folgenden anhand der perspektivischen Explosionsdarstellung gemäß FIG 3 erläutert.

Mit dem Türrahmen TR ist ein. Aufnahmeschacht S integriert. Bei Ausbildung des Türrahmens TR als Kunststoff-Zierrahmen ist zweckmäßigerweise der Aufnahmeschacht S einstückig mitangespritzt. Der Aufnahmeschacht S dient als Einschubhalterung für die komplettierte, in einem, durch Verrasten von Rastösen 9.1 eines Gehäuseoberteils 9 mit Rastnasen 8.1 eines Gehäuseoberteils 9 zusammengesetzten Gehäuse 8;9 aufgenommene Bedien- bzw. Anzeigevorrichtung; diese Baugruppe ist mit gehäuseseitigen Führungsstegen 8.3 in korrespondierenden Führungsschienen S1 des Aufnahmeschachtes S in Einschubrichtung einführbar und in ihrer Einschubendlage durch Verrasten von gehäuseseitigen Rastnasen 8.2 hinter Raststege S2 des Aufnahmechachtes S fixierbar. Die in ihrer Bauhöhe dem Türrahmen TR angepaßte Vorderseite der Bedien- bzw. Anzeigevorrichtung ist dabei durch Einpressen der die Gehäusehälften 8;9 vorderseiig überspannenden elastischen Schutzhaube 7 in den Türrahmen TR bzw. in ein entsprechendes umlaufendes Rahmenteil S3 des Aufahmeschachtes S derart einbringbar, daß unter Überbrückung von Montagetoleranzen sowohl eine gute Fixierung als auch sichere Abdichtung gewährleistet ist.

Die Hart-Tasten 4 greifen einschließlich ihrer schutzhaubenseitigen Schwenkaufnahme durch Öffnungen 0 sowohl des Zierrahmens TR als auch der Frontseite des Aufnahmeschachtes S. Die Öffnungen O weisen innenseitig umlaufende Stege S4 auf, derart daß durch deren Kantenpressung in die umlaufende Schutzhauben-Umfassung einer Hart-Taste 4 eine sichere Abdichtung ohne Behinderung einer Tastenbetätigung gewährleistet ist. Die elastisch verformbare Schutzhaube dient somit in vorteilhafter Weise nicht nur der Abdichtung der Bedien- bzw. Anzeigevorrichtung gegen das Eindringen äußerer Feuchtigkeit, sondern übernimmt auch Halterungs- und Betätigungsfunktionen für die Hart-Tasten, dient als Lichtdiffusor für eine optimale Leuchtanzeigen-Übertragung zwischen den Lichtleitern der Leuchtanzeigen und den vorderen Betätigungs-Leuchtanzeigen und erleichtert die Halterungsaufnahme der Bedien- bzw. Anzeigevorrichtung in dem Türrahmen bzw. in dem damit integrierten Aufnahmeschacht.

Der Türrahmen TR kann, insbesondere bei Ausbildung als Kunststoff-Zierrahmen, mit einem Halteblechteil B der Tür verbunden, insbesondere verrastet bzw. verriegelt, sein. Im vorliegenden Beispiel dienen zur stirnseitigen Verbindung zwischen dem Türrahmen TR und dem Halteblechteil B rahmenseitige Rasthaken TR1 bzw. TR2, die hinter entsprechende Raststege B1 des Halteblechteils B einschnappen bzw. aus dem Türblech herausgebogene Laschen B2 bzw. B3, unter die der Aufnahmeschacht S mit Klemmenden durch Unterschieben verkeilbar ist.

## Patentansprüche

1. Türrahmen, der zur außen umlaufenden Begrenzung einer Beschickungstür dient, mit einer in den Türrahmen einsetzbaren Bedien- bzw. Anzeigevorrichtung, insbesondere für eine Geschirrspülmaschine,
- mit einem an den Türrahmen (TR) angeformten, in das Türinnere ragenden Aufnahmeschacht (S) als Einschubhalterung für die komplette Bedien- bzw. Anzeigevorrichtung, derart daß die Bedien- bzw. Anzeigevorrichtung in ihrer relativ zu dem Aufnahmeschacht (S) fixierbaren Einschub-Endstellung mit ihrer vorderfrontseitigen Bedien- bzw. Anzeigeebene (2) im Außenbereich der Schmalseite des Türrahmens (TR) angeordnet ist, wobei die komplette Bedien- bzw. Auzeigevorrichtung in den Aufnahmeschacht von dessen dem Türrahmen abgewandten Aufnahmeseite von Tür inneren her einführbar ist.

2. Türrahmen mit einsetzbarer Bedien- bzw. Anzeigevorrichtung nach Anspruch 1
- mit einer in einem, insbesondere aus zwei Gehäusehälften (8 bzw.9) zusammengesetzten, Gehäuse (8;9) angeordneten Bedien- bzw. Anzeigevorrichtung.

3. Türrahmen mit einsetzbarer Bedien- bzw. Anzeigevorrichtung nach Anspruch 2
- mit einem vorderseitig von einer elastischen Schutzhaube (7), insbesondere Silikon-Schutzhaube, übergriffenen Gehäuse (8;9);

4. Türrahmen mit einsetzbarer Bedien- bzw. Anzeigevorrichtung nach Anspruch 3
- mit an der Vorderseite der Schutzhaube (7) im Bereich der Bedien- bzw. Anzeigeebene (2) fixierten Hart-Tasten (4), deren Betätigung über die elastisch verformbare Schutzhaube (7) und durch von dieser abgedeckte Öffnungen des Gehäuses (8;9) auf rückseitige Stellmittel der Bedien- bzw. Anzeigevorrichtung übertragbar ist.

5. Türrahmen mit einsetzbarer Bedien- bzw. Anzeigevorrichtung nach Anspruch 3 und/oder 4
- mit über die elastische Schutzhaube (7) in dem Türrahmen (TR) bzw. in dem Aufnahmeschacht (S) elastisch fixierbarer und abdichtbarer Bedien- bzw. Anzeigevorrichtung.

6. Türrahmen mit einsetzbarer Bedien- bzw. Anzeigevorrichtung nach zumindest einem der Ansprüche 3-5
- mit einer Betätigungs-Rückmeldung des Stellmittels über einen Lichtleiter (6) zu der Bedien- bzw. Anzeigeebene (2).

7. Türrahmen mit einsetzbarer Bedien- bzw. Anzeigevorrichtung nach Anspruch 6
- mit einer als Lichtdiffusor-Membram (7.2) für den Lichtleiter (6) als Teil der Schutzhaube (7).

8. Türrahmen mit einsetzbarer Bedien- bzw. Anzeigevorrichtung nach Anspruch 6 und/oder 7
- mit in die Bedienfläche der Hart-Tasten ($) integrierter Betätigungs-Leuchtanzeige (4.3) zur Anzeige einer Betätigungs-Rückmeldung des Stellmittels.

9. Türrahmen mit einsetzbarer Bedien- bzw. Anzeigevorrichtung nach zumindest einem der Ansprüche 4-7
- mit durch korrespondierende Öffnungen (O) des Türrahmens (TR) bzw. eines diesen halternden Tür-Blechteils (B) ragende bzw. betätigbare Hart-Tasten (4).

10. Türrahmen mit einsetzbarer Bedien- bzw. Anzeigevorrichtung nach zumindest einem der Ansprüche 1-9
- mit beim Einschub in den Aufnahmeschacht (S) formschlüssig führbarer Bedien- bzw. Anzeigevorrichtung bzw. diese aufnehmendem entsprechend führbarem Gehäuse (8;9).

11. Türrahmen mit einsetzbarer Bedien- bzw. Anzeigevorrichtung nach zumindest einem der Ansprüche 1-10
- mit in der Einschub-Endstellung mit dem Aufnahmeschacht (S) verrastbarer Bedien- bzw. Anzeigevorrichtung bzw. diese aufnehmendem verrastbarem Gehäuse (8;9).

12. Türrahmen mit einsetzbarer Bedien- bzw. Anzeigevorrichtung nach zumindest einem der Ansprüche 1-11
- mit einem als Türrahmen (TR) ausgebildeten Zierrahmen mit integriertem Aufnahmeschacht (S), welche an einem Halteblechteil (B) der Beschickungstür (T), insbesondere mittels Rast- bzw. Klemmschluß, fixierbar bzw. abstützbar sind.

## Claims

1. Door frame, which serves for externally encircling bounding of a loading door, with a control or indicating device insertable in the door frame, particularly for a dishwashing machine, with a receiving shaft (S), which is formed at the door frame (TR) and projects into the door interior, as an insert mounting for the complete control or indicating device in such a manner that the control or indicating device in its insert end setting, which is fixable relative to the receiving shaft (S), is arranged by its frontal control or indicating plane (2) in the outer region of the narrow side of the door frame (TR), wherein the complete control or indicating device is introducible into the receiving shaft from the receiving side thereof, which is remote from the door frame, from the door interior.

2. Door frame with insertable control or indicating device according to claim 1, with a control or indicating device arranged in a housing (8; 9) assembled from, in particular, two housing halves (8 and 9).

3. Door frame with insertable control or indicating device according to claim 2, with a housing (8; 9) engaged over at the front side by a resilient protective hood (7), particularly a silicon protective hood.

4. Door frame with insertable control or indicating device according to claim 3, with hard buttons (4) which are fixed at the front side of the protective hood (7) in the region of the control or indicating plane (2) and the actuation of which is transmissible by way of the resiliently deformable protective hood (7) and via openings, which are covered by this, of the housing (8; 9) to setting means of the control or indicating device at the rear side.

5. Door frame with insertable control or indicating device according to claim 3 and/or 4, with control or indicating device resiliently fixable and sealable in the door frame (TR) or in the receiving shaft (S) by way of the resilient protective hood (7).

6. Door frame with insertable control or indicating device according to at least one of claims 3 to 5, with an actuation acknowledgement of the setting means by way of an optical conductor (6) to the control or indicating plane (2).

7. Door frame with insertable control or indicating device according to claim 6, with a [region] as light-diffuser membrane (7.2) for the optical conductor (6) as part of the protective hood (7).

8. Door frame with insertable control or indicating device according to claim 6 and/or 7, with an actuation illuminated display (4.3), which is integrated in the control surface of the hard buttons (4), for display of an actuation acknowledgement of the setting means.

9. Door frame with insertable control or indicating device according to at least one of claims 4 to 7, with hard buttons (4) projecting or actuable through corresponding openings (O) of the door frame (TR) or a door sheet metal part (B) mounting this.

10. Door frame with insertable control or indicating device according to at least one of claims 1 to 9, with a control or indicating device able to be guided in mechanically possible manner on insertion into the receiving shaft (S) or a housing (8; 9) receiving this device and able to be guided in corresponding manner.

11. Door frame with insertable control or indicating device according to at least one of claims 1 to 10, with control or indicating device detentable, in the insertion end setting, with the receiving shaft (S) or a detentable housing (8; 9) receiving this device.

12. Door frame with insertable control or indicating device according to at least one of claims 1 to 11, with a decorative frame, which is constructed as door frame (TR), with integrated receiving shaft (S), which can be fixed or supported at a mounting sheet metal part (B) of the loading door (T) particularly by means of a detent coupling or clamping coupling.

## Revendications

1. Cadre de porte, qui sert à la délimitation périphérique à l'extérieur d'une porte d'alimentation, avec un dispositif de commande resp. d'affichage pouvant être inséré dans le cadre de porte, en particulier pour un lave-vaisselle,
- avec un puits de logement (S) formé sur le cadre de porte (TR) et dépassant à l'intérieur de la porte comme support insérable pour le dispositif complet de commande resp. d'affichage, de telle sorte que le dispositif de commande resp. d'affichage est disposé dans sa position extrême d'insertion pouvant être fixé par rapport au puits de logement (S) avec son plan de commande resp. d'affichage (2) côté avant dans la zone extérieure du côté étroit du cadre de porte (TR), le dispositif complet de commande resp. d'affichage pouvant être introduit dans le puits de logement par le côté logement de ce puits opposé au cadre de porte par l'intérieur de la porte.

2. Cadre de porte avec dispositif de commande resp. d'affichage insérable selon la revendication 1
- avec un dispositif de commande resp. d'affichage disposé dans un boîtier (8 ; 9) composé en particulier de deux moitiés de boîtier (8 resp. 9).

3. Cadre de porte avec dispositif de commande resp. d'affichage insérable selon la revendication 2
- avec un boîtier (8 ; 9) recouvert côté avant par un capot protecteur élastique (7), en particulier un capot protecteur en silicone.

4. Cadre de porte avec dispositif de commande resp. d'affichage insérable selon la revendication 3
- avec des touches dures (4) fixées sur le côté avant du capot de protection (7) dans la zone du plan de commande resp. d'affichage (2), touche dont l'actionnement peut être transmis au moyen du capot protecteur (7) élastiquement déformable et par des ouvertures, cachées par ce capot, du boîtier (8 ; 9) à des moyens de réglage côté arrière du dispositif de commande resp. d'affichage.

5. Cadre de porte avec dispositif de commande resp. d'affichage insérable selon la revendication 3 et/ou 4
- avec un dispositif de commande resp. d'affichage pouvant être fixé élastiquement au moyen du capot protecteur (7) élastique dans le cadre de porte (TR) ou dans le puits de logement (S) et pouvant être rendu étanche.

6. Cadre de porte avec dispositif de commande resp. d'affichage insérable selon au moins l'une quelconque des revendications 3 à 5
- avec un accusé de réception d'actionnement de l'organe de réglage au moyen d'un guide optique (6) pour le plan de commande resp. d'affichage (2).

7. Cadre de porte avec dispositif de commande resp. d'affichage insérable selon la revendication 6
- avec une membrane à diffuseur de lumière (7.2) pour le guide optique (6) comme partie du capot protecteur (7).

8. Cadre de porte avec dispositif de commande resp. d'affichage insérable selon la revendication 6 et/ou 7
- avec affichage lumineux d'actionnement (4.3) intégré dans la surface de commande des touches dures (S) pour l'affichage d'un accusé de réception d'actionnement du moyen de réglage.

9. Cadre de porte avec dispositif de commande resp. d'affichage insérable selon au moins l'une quelconque des revendications 4 à 7
- avec des touches dures (4) dépassant resp. pouvant être actionnées à travers des ouvertures (O) correspondantes du cadre de porte (TR) resp. d'une partie en tôle de porte (B) supportant ce cadre.

10. Cadre de porte avec dispositif de commande resp. d'affichage insérable selon au moins l'une quelconque des revendications 1 à 9
- avec un dispositif de commande resp. d'affichage pouvant être guidé par complémentarité de forme lors de l'insertion dans le puits de logement resp. avec un boîtier (8 ; 9) recevant ce dispositif et pouvant être guidé en conséquence.

11. Cadre de porte avec dispositif de commande resp. d'affichage insérable selon au moins l'une quelconque des revendications 1 à 10
- avec un dispositif de commande resp. d'affichage pouvant être verrouillé dans la position extrême d'insertion avec le puits de logement (S) resp. avec un boîtier (8 ; 9) logeant ce dispositif et pouvant être verrouillé.

12. Cadre de porte avec dispositif de commande resp. d'affichage insérable selon au moins l'une quelconque des revendications 1 à 11
- avec un cadre enjoliveur conçu comme cadre de porte (TR) avec puits de logement (S) intégré, qui peut être fixé resp. soutenu sur une partie en tôle de maintien (B) de la porte d'alimentation (T), en particulier au moyen d'une fermeture par encliquetage resp. serrage.
